## Europäisches Patentamt
## European Patent Office
## Office européen des brevets

(19)

(11) Publication number: **O 003 142**
**B1**

(12)

# EUROPEAN PATENT SPECIFICATION

(45) Date of publication of patent specification: **28.07.82**

(51) Int. Cl.³: **F 16 L 33/20, B 21 D 39/04**

(21) Application number: **79100120.9**

(22) Date of filing: **16.01.79**

(54) Hose fitting and method of assembly.

(30) Priority: **16.01.78 US 869714**

(43) Date of publication of application:
**25.07.79 Bulletin 79/15**

(45) Publication of the grant of the patent:
**28.07.82 Bulletin 82/30**

(84) Designated Contracting States:
**BE DE FR GB NL SE**

(56) References cited:
**FR - A - 1 323 740**
**US - A - 3 549 180**

(73) Proprietor: **STRATOFLEX, INC.**
**220 Roberts Cut-Off**
**Fort Worth, Texas 76114 (US)**

(72) Inventor: **Vyse, Gerrard N.**
**813 Springlake Drive**
**Bedford Texas 76021 (US)**

(74) Representative: **Brown, John David**
**FORRESTER & BOEHMERT Widenmayerstrasse**
**4/I**
**D-8000 München 22 (DE)**

Courier Press, Leamington Spa, England.

Hose fitting and method of assembly

This invention relates to a hose fitting including a nipple, a collar attached to the nipple, and a socket.

The invention also relates to a method of assembling such a fitting and a hose, comprising the steps of positioning the nipple in clamping jaws to hold it stationary, placing the collar on the nipple and securing the collar to the nipple.

A hose coupling or fitting is shown in U.S. Patents No. 3,924,883 and No. 4,006,524, wherein a tubular nipple is fitted with a reinforcing sleeve, and an outer metal socket is clamped to the nipple and the sleeve. The fitting is attached to a hose by positioning the end of the hose in a space between the sleeve and the socket, and then crimping the socket inwardly.

The foregoing construction is disadvantageous in that it requires a reinforcing sleeve and, generally, a particular size fitting will work well with only one style or size of hose.

Furthermore, in the construction disclosed in U.S. Patent Specification No. 3,924,883, a one piece collar and skirt are provided, and this arrangement requires considerable machining and makes difficult the provision of a plurality of inexpensive sockets for different hose designs. Furthermore the nipple itself is of fairly complex construction, being made up of a plurality of parts.

French Patent Specification No. 1,323,740 discloses a hose fitting wherein a tubular nipple is fitted within an end part of a hose, a collar positioned on the tubular nipple being engaged by the end of the hose, and a sleeve or socket surrounding said end portion of the hose and extending partly over the collar is deformed radially inwardly to engage the tapering periphery of the collar to prevent the sleeve from being drawn off the collar. The collar is located against axial movement on the tubular nipple by deforming, during assembly of the fitting, a portion of the nipple radially outwardly into an annular groove formed internally in the collar, by means of a mandrel forced into the tubular nipple to engage a shoulder formed internally in the tubular nipple at the desired location of the annular deformation. It is also suggested that a plurality of sockets of common external diameter but different wall thickness may be used for hoses of different outer diameter.

The construction disclosed in this French patent specification has, however, the disadvantage that by reason of the necessity of providing an internal shoulder for cooperation with the mandrel, as well as the formations adopted externally to ensure sealing engagement with the hose interior, the tubular nipple is expensive to produce. Furthermore, the joint between the sleeve and collar would be likely to fail under high axial stress and the exposed free edge of the sleeve may present a hazard to personnel and equipment. The suggestion for coping with hoses of different outer diameter is expensive and somewhat impractical.

It is among the objects of the invention to provide an improved fitting and method of assembly which eliminates the foregoing disadvantages, and whereby an inexpensive, easily assembled connection between a hose and a tube may be afforded.

According to one aspect of the invention, there is provided a hose fitting comprising a tubular nipple, a separately formed one-piece collar positioned on said nipple, and a separately formed generally tubular socket capable of being positioned around said nipple so as to at least partially overlie said collar, and to define with said nipple an annular space adapted to receive the end portion of a length of hose, characterised in that said collar includes an annular groove formed in the outer periphery thereof, and said socket includes an annular, radially inwardly extending flange at one end thereof having an internal diameter such as to allow said flange to be extended over said collar to lie directly radially outwardly of said annular groove, the socket, including said flange being deformable radially inwardly to reduce the diameter of the socket and engage said annular flange in said groove to secure said socket to said collar, said collar and said nipple being tightly secured together by generally curved bead means formed by buckling said nipple into engagement with said collar.

In preferred embodiments, a plurality of interchangeable sockets are provided, each having flanges of the same size, said collar having an annular groove for receiving said flange of a selected socket, each of said sockets further having a hose engaging portion of a different internal diameter whereby said fitting may be used with different size hose by selecting a socket having the appropriate internal diameter.

According to another aspect of the invention there is provided a method of assembling a fitting and a hose, said fitting comprising a nipple, a collar and a socket, comprising the steps of positioning said nipple in clamping jaws to hold said nipple stationary, placing said collar on said nipple and securing said collar to said nipple, characterised by forming an annular groove in the outer periphery of said collar, forming bead means on said nipple to secure said nipple to said collar, forming said socket separately from said collar and forming a radial flange on one end of said socket, positioning said socket over said hose, inserting said nipple into said hose, moving said socket over the end portion of said hose and at least partially over said collar with said flange overlying said groove, and crimping said socket tightly onto said hose and said flange into said groove of said collar.

The hose fitting according to the invention has the advantage that the tubular nipple may comprise, or may be readily formed from ordinary metal tube, without complex and expensive machining or forming operations being necessary. Furthermore because it is unnecessary for the radially inner edge of the flange on the socket to engage the very bottom of the annular groove in the collar in order to ensure reliable retention of the socket on the collar, it is possible to provide, for a single size of collar, a plurality of sockets in a wide range of sizes, all of which, nevertheless, can be located reliably on the same size of collar. This makes it necessary only to stock sockets in different sizes for a particular inner diameter of hose, and it is not also necessary to stock a different size of nipple and collar for each size of socket.

Embodiments of the invention are described below, by way of example, with reference to the accompanying drawings, wherein:

Figure 1, 2 and 3 are views in axial section illustrating steps in assembling a hose with a fitting embodying the present invention;

Figures 4, 5, 6 and 7 are views, in axial section, illustrating the process of making a fitting embodying the invention, and

Figures 8 and 9 are axial views which illustrate the formation of another kind of fitting embodying the invention.

A fitting in accordance with the present invention is designed for use in an application requiring metal tubing, and comprises a tubular nipple 10, a collar 11 which is secured to the outer surface of the nipple 10, and a socket 12 which extends over the forward end of the nipple 10 and is secured to the collar 11.

The nipple 10 is advantageously formed from the end section of the metal tubing, thereby eliminating the need for forming a fitting separate from the tube and fastening the tube to the fitting by a brazing operation, as was frequently the practice in prior art constructions. The end section of the nipple 10 has a plurality of axially spaced annular serrations or ribs 16 formed thereon as by a rolling operation or by machining. The collar 11 is fastened to the outside of the nipple 10 rearwardly of the serrations 16, the collar 11 being held in place between two beads 17 and 18 formed on the nipple. The bead 17 is located forwardly of the collar 11 and abuts the forward side of the collar, whereas the other bead 18 is located at and abuts the rearward side of the collar. The rear bead 18 preferably has an arcuate or curved outer surface 19 which fits into a mating curved recess 21 on the inner rearward corner of the collar 11. The collar 11 further includes an annular recess or groove 22 in its outer peripheral surface adjacent the forward side thereof, which is utilised in securing the socket 12 to the collar 11 as will be described.

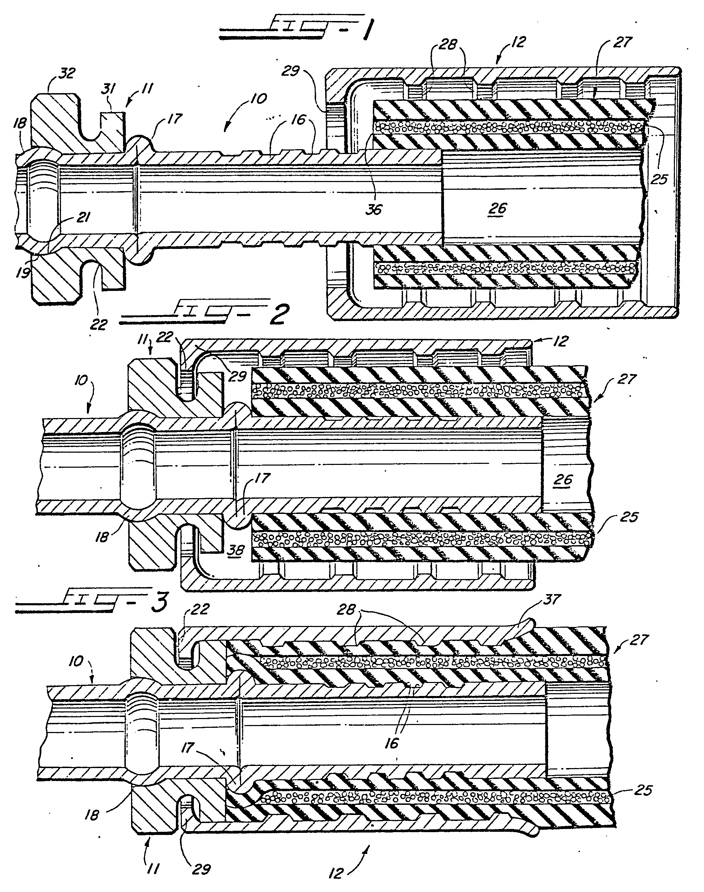

The socket 12 is secured to the nipple 10 as by crimping, and it has an initial or uncrimped configuration, shown in Figures 1 and 2, and a final or crimped configuration, shown in Figure 3. The socket is tubular and, initially, is sufficiently large in diameter to extend over the ribbed portion of the nipple 10 and over the outer diameter of a length of hose 27 having an inner flow passage 26. The hose 27 may be of the type which is made of a plastic, rubber or a rubber-like composition, and, in the present example, a layer 25 of reinforcement is embedded in it. While the outer peripheral surface of the socket 12 may be smooth, the inner peripheral surface is preferably provided with a plurality of annular ribs 28 which may be machined on the socket 12 and which help to secure the hose 27 to the fitting. At the forward end of the socket 12 is a radially inwardly extending lip 29 having an axial dimension that is slightly less than the axial dimension of the annular groove 22 of the collar 11. As is best shown in Figure 2, the inner diameter of the lip 29 is initially slightly greater than the outer diameter of the forward portion 31 of the collar 11, so that the lip 29 may be moved, during assembly of the parts, rearwardly over the portion 31 and into radial alignment with the groove 22. The radial dimension of the rearward portion 32 of the collar 11 is preferably greater than the inner diameter of the lip 29 so that the portion 32 will act as a stop or abutment for the rearward end of the socket 12 when the socket 12 is moved to the position shown in Figure 2. When the rearward end of the socket 12 engages the portion 32 of the collar, the lip 29 is radially aligned with the annular recess 22.

The fitting is assembled with the hose by first sliding the socket over the end of the hose 27 to approximately the position shown in Figure 1. The nipple 10 is then inserted into the passage 26 and forced toward the right as shown in Figures 1 and 2 until the end surface 36 of the hose 27 meets the bead 17. The socket 12 is moved toward the left relative to the collar 11 until it meets the portion 32 of the collar 11, and as previously mentioned, in this position the lip is radially aligned with the groove 22 of the collar 11. A high compressive force is then applied to the socket 12 to reduce its diameter to the final configuration shown in Figure 3. This may be accomplished by placing the fitting and the end of the hose in a crimping machine where the socket 12 is crimped radially inwardly. Figures 1 to 3 illustrate the construction where the hose 27 includes a relatively thick cover or layer on the outside of the reinforcement 25. The compressive force is applied to the socket from the rearward end adjacent the lip 29 to approximately the forward end which terminates in a skirt 37, and the diameter of the socket 12 is reduced sufficiently to tightly compress the hose 27 between the nipple 10 and the socket 12. The lip 29 of the socket 12 is forced into the groove 22 of the collar 11 in order to attach the socket 12 to the collar 11.

Where the outer cover of the hose is relatively thick as shown, the forwardmost end of the socket 12 is bent to produce an outwardly flared skirt 37 (Figure 3), which eliminates a bulge in the hose cover and reduces the danger of damaging the hose 26 when the hose is bent close to the fitting. In a construction where the hose has a relatively thin outer cover, the skirt 37 may be eliminated and the socket may be crimped uniformly throughout its length. As shown in Figure 3, the compression applied to the hose 26 as a result of the crimping operation causes the end portion of the hose 27 to be tightly compressed and gripped between the socket 12 and the nipple 10, and the rearwardmost end portions of the inner lines and the outer cover of the hose 27 are forced or extruded into a pocket 38 (Figure 2) around the bead 17.

After crimping, the finished forms of the hose and fitting assembly is generally as shown in Figure 3. The outer diameter of the socket 12, after crimping, may vary from assembly to assembly, depending upon such factors as the initial outer diameter of the hose 27 and the initial wall thickness of the socket 12. For a given hose inner diameter, the hose outer diameter may vary according to the pressure rating, a high pressure hose of course having a thicker reinforcement than a low pressure hose. The wall thickness of a socket 12 designed for a high pressure assembly will also normally be greater than for a low pressure assembly. For these reasons, the outer diameter of the socket 12 and the inner diameter of the lip 29, after crimping, may vary from assembly to assembly, but the initial inner diameter of the lip 29 will preferably be the same for all sockets designed for use with a given nipple design. Regardless of the finished or crimped inner diameter of the lip 29, it will of course be locked in the groove 22.

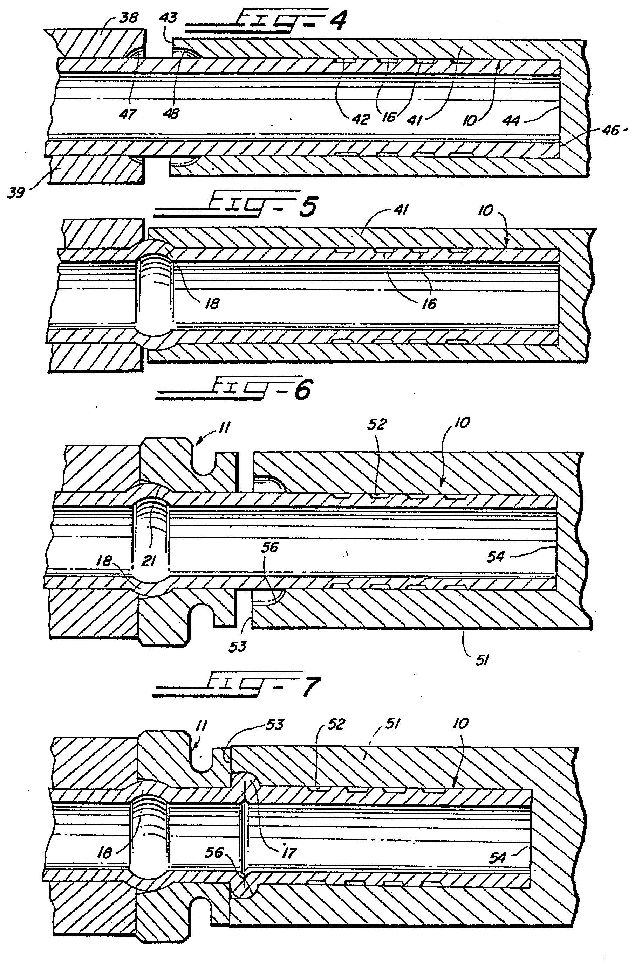

Figures 4, 5, 6 and 7 illustrate a number of steps in the manufacture of the nipple 10 and of the attachment of the nipple 10 to the collar 11. The end portion of a length of metal tube first has the annular ribs or serrations 16 formed on its outer surface as by a rolling or machining operation as previously mentioned. The tube, which forms the nipple 10, is then placed between two clamping jaws 38 and 39 which, when moved together, tightly grip the tube between them with the portion that forms the nipple 10 extending out from one side of the clamping jaws 38 and 39. A punch 41 having a cylindrical bore 42 formed therein is then positioned over the nipple 10. The diameter of the bore 42 is sized to produce a snug fit with the nipple 10, and the depth of the bore 42, measured from the end surface 43 of the punch 41 to the bottom 44 of the bore 42, is less than the length of the nipple. Thus, the bottom 44 of the bore 42 engages the end surface 46 of the nipple 10, and when the punch 41 is moved toward and up against the clamping jaws 38, the nipple 10 buckles in the area between the clamping jaws 38 and 39 and the surface 43, whereby forming the bead 18. The two clamping jaws 38 and 39 have an arcuate recess 47 formed therein on the inner corner which faces the surface 43, and the inner corner of the surface 43 also has an arcuate recess 48 formed therein. The two recesses 47 and 48 control the shape of the buckling of the nipple 10 and produce the curvature of the bead 18.

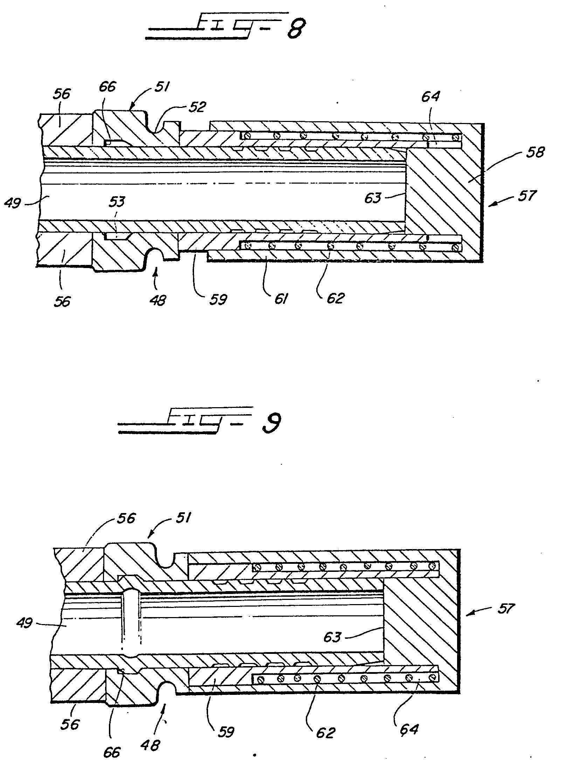

After the bead 18 has been formed, the punch 41 is withdrawn from the nipple 10 and the previously formed collar 11 is then slipped over the nipple 10 and moved into engagement with the bead 18, as shown in Figure 6. As previously mentioned, the collar 11 has an arcuate recess 21 formed therein which mates with the curved bead 18 as shown in Figure 6.

After the collar 11 is positioned on the nipple 10, a second, and shorter, punch 51 having a cylindrical bore 52 is positioned over the end of the nipple 10. The bore 52 also has a snug fit with the outer diameter of the nipple 10 and the depth of the bore 52, measured from the end surface 53 to the bottom 54 of the bore 52, is less than the distance from the forward surface of the collar 11 to the forward end of the nipple 10. Thus, the end surface 53 of the punch 51 is initially spaced from the collar 11. Once again, the inner rearward corner 56 of the punch 51 has an arcuate recess formed therein. With the clamping jaws 38 and 39 tightly gripping the nipple 10, the punch 51 is moved toward the left as seen in Figure 6, thereby buckling the nipple 10 in the space between the punch 51 and the collar 11 and forming the second bead 17 as shown in Figure 7. The punch 51 is moved toward the left until its rearward face 53 engages the collar 11 which of course cannot move toward the left due to its engagement with the clamping jaws 38 and 39 and with the first formed bead 18. The nipple 10 buckles upwardly into the recess 56 of the punch 51 and the bead 17 is pressed tightly against the forward surface of the collar 11, thereby tightly fastening the collar 11 to the nipple 10. Thereafter, the punch 51 is removed and the assembled nipple 10 and collar 11 are removed from the clamping jaws 38 and 39. The nipple and collar may then be assembled with the hose 26 and with the socket 12 as previously described.

Figures 8 and 9 illustrate an alternative form of the nipple. This nipple 48 includes a length of tubing 49 which may be the same as the corresponding part shown in Figures 8 and 9. A collar 51 is positioned over the tubing 49, the collar 51 having an annular groove 53 in its outer periphery and an annular groove 53 in its inner periphery. The groove 52 of course corresponds to the groove 22.

The tubing 49 is secured to the collar 51 by expanding the tubing 49 into the groove 53. The tubing 49 is clamped between two jaws 56, and the collar 51 is positioned on the tubing. A punch 57 made up of a main part 58 and a tubular insert 59, is positioned over the right hand end of the tubing. The insert fits snugly over the outer surface of the tubing, and the part 58 includes a tubular section 61 that fits around the insert 59. A compression spring 62 is positioned between the insert 59 and the part 58 and holds the insert 59 against the collar 51. The part 59 also includes a central part 63 that engages the end of the tubing.

It will be apparent that the outer surface of the tubing 49 is confined by the jaws 56, the collar 51 and the insert 59, except in the area of the groove 53. When the part 58 of the punch 57 is moved to the left relative to the jaws 56, the tubing buckles outwardly into the groove 53, as shown in Figure 10. As the part 58 moves towards the left, the insert 59 slides into a recess 64 in the part 58 and the spring 62 compresses.

The nipple 48 may be assembled with a socket and hose as described above. The groove 53 preferably is given a hook shape in the area indicated by the numeral 66, which helps to prevent the collar from being forced off of the tubing after the nipple is assembled with a hose and socket and high pressure is applied to the assembly.

A fitting constructed and assembled in accordance with the present invention has a number of advantages over the prior art constructions. A nipple 10, having a collar 11 secured thereto, of a particular outer diameter may be used with a number of different hose designs and with a set of different sockets. The different hose designs which are usable with a particular size nipple 10 would all have the same internal diameter but may have different wall thicknesses. For a wall thickness of one dimension, a sleeve 12 is selected from the set having the appropriate diameter. For a hose having, for example, less radial thickness, a socket 12 may be used which has a smaller inner diameter. Consequently, a particular size of nipple 10 and collar 11 may be provided along with a number of different sockets 12 having a range of sizes. This makes it necessary only to stock sockets in different sizes for a particular inner diameter of hose, and it is not necessary to stock the nipple 10 and collar 11 for each size socket.

This has another important advantage in that a socket 12 may be radially chosen for a particular size or design of hose which will result in a precisely controlled amount of compression on the hose 26 and the nipple 10. Further, the selected wall thickness of the tubing used for the nipple 10 is large enough that the nipple will suffer little or no collapse when assembled with hose up to a preselected pressure rating. The amount of pressure applied to the nipple during assembly is determined by the thickness of the hose reinforcement 25 and by the amount of swaging pressure needed to secure the hose to the fitting and meet the pressure rating of the assembly. Consequently, there is little or no danger of collapse of the nipple 10 when the socket 12 is crimped. This has the advantage of eliminating the need for a reinforcing sleeve on the nipple as is required in some prior art constructions.

It should be apparent that modifications may be made in the apparatus and method while still falling within the scope of the present invention. For example, the collar 11 may be secured to the nipple 10 as by positioning the collar on the nipple and forming the two beads in a single pressing operation.

It should be apparent that modifications may be made in the apparatus and method while still falling within the scope of the present invention. For example, the collar 11 may be secured to the nipple 10 as by positioning the collar on the nipple and forming the two beads in a single pressing operation.

**Claims**

1. A hose fitting comprising a tubular nipple (10), a separately formed one-piece collar (11) positioned on said nipple, and a separately formed, generally tubular socket capable of being positioned around said nipple (10) so as to at least partially overlie said collar, and to define with said nipple an annular space adapted to receive the end portion of a length of hose, characterised in that said collar (11) includes an annular groove (22) formed in the outer periphery thereof, and said socket includes an annular, radially inwardly extending flange (29) at one end thereof having an internal diameter such as to allow said flange to be extended over said collar (11) to lie directly radially outwardly of said annular groove, the socket, including said flange, being deformable radially inwardly to reduce the diameter of the socket and engage said annular flange in said groove (22) to secure said socket to said collar, said collar and said nipple being tightly secured together by generally curved bead means (17), (18), (66) formed by buckling said nipple (10) into engagement with said collar (11).

2. A hose fitting as claimed in claim 1, characterised in that said bead means comprises two beads (17), (18) on said nipple (10), one of said beads being formed on each side of said collar (11).

3. A hose fitting as claimed in claim 1, characterised in that said collar (51) has a groove (53) formed in its inner periphery, and said bead means comprises a bead formed by buckling said nipple outwardly in said groove.

4. A hose fitting as claimed in claim 1 characterised by a plurality of generally tubular sockets each capable of being positioned around said nipple (10) so as to at least partially overlie said collar and each having a respective hose-engaging portion adapted to define with said nipple, a said annular space to receive the end portion of a length of hose, each of said sockets including an annular radially inwardly extending flange (29) at one end thereof having an internal diameter such as to allow said flange to be extended over said collar to lie radially outwardly of said annular groove, each said socket, including the respective flange thereof, being deformable radially inwardly to reduce the diameter of the socket and engage said annular flange of the socket in said groove to secure the socket to said collar, each of said plurality of sockets having the respective hose engaging portion of a different internal diameter whereby said fitting may be used with a hose of any of a variety of different external diameters, by selecting the socket with the appropriate internal diameter.

5. A method of assembling a fitting and a hose (27), said fitting comprising a nipple (10), a collar (11) and a socket (12), comprising the steps of positioning said nipple in clamping jaws (38, 39) to hold said nipple stationary, placing said collar (11) on said nipple and securing said collar to said nipple, characterised by forming an annular groove (22) in the outer periphery of said collar, forming bead means (17, 18, 66) on said nipple to secure said nipple to said collar, forming said socket (12) separately from said collar and forming a radially inwardly extending flange (29) on one end of said socket, positioning said socket over said hose, inserting said nipple into said hose, moving said socket over the end portion of said hose and at least partially over said collar with said flange (29) overlying said groove (22), and crimping said socket tightly onto said hose and said flange (29) into said groove (22) of said collar.

6. A method as claimed in claim 5, and further providing a plurality of sockets, each of said sockets having a hose engaging portion and said hose engaging portions having different internal diameters, characterised by forming on each of said sockets a respective said radially inwardly extending flange, selecting a socket from said set having an internal diameter to match the external diameter of said hose, positioning said selected socket over said hose, positioning said nipple into said hose, and compressing said socket into tight engagement with said hose and said flange into said groove of said collar.

Revendications

1. Embout pour tuyau souple comprenant un manchon tubulaire (10), un collier (11) distinct formé d'une seule pièce et placé sur ledit manchon, et une douille de forme générale tubulaire et susceptible d'être disposée autour dudit manchon (10) de manière à recouvrir au moins partiellement ledit collier, et à définir avec ledit manchon un espace annulaire adapté pour recevoir la partie terminale d'une portion du tuyau souple, caractérisé en ce que ledit collier (11) comporte une gorge annulaire (22) disposée à la périphérie externe de celui-ci, et en ce que ladite douille est pourvue à l'une de ses extrémités d'une collerette annulaire (29) radiale faisant saillie vers l'intérieur et dont le diamètre interne lui permet de s'étendre sur le collier (11) et de se placer directement, radialement et extérieurement en regard de ladite gorge annulaire, la douille, pourvue de ladite collerette, étant déformable radialement vers l'intérieur afin de réduire son diamètre et d'engager ladite collerette annulaire dans ladite gorge annulaire (22), de manière à fixer ladite douille audit collier, ce dernier et le manchon étant fixés l'un à l'autre de façon étanche par des organes en saillies (17), (18), (66), de forme générale courbe, formés par déformation dudit manchon (10) en prise avec ledit collier (11).

2. Embout selon la revendication 1, caractérisé en ce que les organes en saillie comportent sur le manchon (10) deux bourrelets (17, 18) respectivement formés de part et d'autre du collier (11).

3. Embout selon la revendication 1, caractérisé en ce que le collier (51) présente une gorge (53) formée à sa périphérie interne, lesdits organes en saillie comportant un bourrelet constitué par déformation vers l'extérieur du manchon dans ladite gorge.

4. Embout selon la revendication 1, caractérisé par une pluralité de douilles de forme générale tubulaire et chacune susceptible d'être disposée autour dudit manchon (10) de manière à recouvrir au moins partiellement ledit collier et ayant chacune une partie respective en prise avec le tuyau adaptée pour définir avec ledit manchon un espace annulaire destiné à recevoir la partie terminale du tuyau souple, chaque douille comportant à l'une de ses extrémités une collerette annulaire (29) s'étendant radialement vers l'intérieur et dont le diamètre interne est susceptible de permettre à ladite collerette de s'étendre sur le collier et de se placer radialement et extérieurement en regard de ladite gorge annulaire, chaque douille comportant sa collerette respective, étant déformable radialement vers l'intérieur afin de réduire son diamètre et d'engager la collerette annulaire de la douille dans ladite gorge pour fixer la douille au collier, chacune des douilles étant pourvue d'une partie respective en prise avec le tuyau d'un diamètre interne différent, l'embout pouvant être ainsi utilisé avec un tuyau de diamètre externe variant dans une certaine mesure, en choisissant la douille avec le diamètre interne approprié.

5. Méthode pour assembler un embout et un tuyau souple (27), ledit embout comportant un manchon (10), un collier (11) et une douille (12), comprenant les étapes de positionner ledit manchon dans des mâchoires de serrage (38, 39) destinées à maintenir fixe le manchon, de placer ledit collier (11) sur ledit manchon et de fixer ledit collier sur le manchon, caractérisée en ce que l'on forme une gorge annulaire (22) à la périphérie externe du collier, en ce que l'on forme des organes en saillie (17, 18, 66) sur ledit manchon afin de fixer ce dernier au collier, en ce que l'on forme ladite douille (12) séparément du collier, et en ce que l'on forme à 'lune des extrémités de ladite douille une collerette (29) s'étendant radialement vers l'intérieur, en ce que l'on met en place la douille sur ledit tuyau, en ce que l'on insère le manchon dans le tuyau, en ce que l'on déplace la douille vers la partie terminale du tuyau et au moins partiellement sur le collier avec ladite collerette (29) en regard de ladite gorge (22), et en ce que l'on plisse de façon étanche la douille sur le tuyau et la collerette (29) dans la gorge (22) dudit collier.

6. Méthode selon la revendication 5, et permettant de fournir de plus une pluralité de douilles, chaque douille présentant une portion en prise avec le tuyau, lesdites portions ayant des diamètres internes différents, caractérisée par le fait que l'on forme sur chacune desdites douilles une collerette respective s'étendant radialement vers l'intérieur, en ce que l'on choisit une douille parmi la pluralité de douilles ayant un diamètre interne adapté au diamètre externe dudit tuyau, en ce que l'on dispose ladite douille choisie sur ce dernier, en ce que l'on met en place la douille dans le tuyau et en ce que l'on compresse ladite douille pour un assemblage étanche de celle-ci avec ledit tuyau, et de la collerette dans la gorge dudit collier.

**Patentansprüche**

1. Endgarnitur für Schläuche, welche ein rohrförmiges Anschlußstück (10) einen getrennt ausgebildeten, einstückigen, auf dem Anschlußstück angeordneten Ring (11) und eine getrennt ausgebildete, im wesentlichen rohrförmige Hülse aufweist, die um das Anschlußstück (10) derart herumgelegt werden kann, daß sie mindestens teilweise über dem Ring (11) liegt und mit dem Ring einen Ringraum definiert, welcher zur Aufnahme des Endabschnitts eines Schlauchstückes ausgebildet ist, dadurch gekennzeichnet, daß eine ringförmige Vertiefung (22) im äußeren Umfang des Ringes (11) ausgebildet ist; daß die Hülse einen ringförmigen, sich radial nach innen erstreckenden Flansch (29) an ihrem einen Ende mit einem das Erstrecken des Flansches über den Ring (11), um direkt radial außerhalb der ringförmigen Vertiefung zu liegen, erlaubenden Innendurchmesser, aufweist; daß die Hülse, de Flansch einschließend, radial nach innen deformierbar ist, um den Durchmesser der Hülse zu reduzieren und mit dem ringförmigen Flansch der Vertiefung (22) zum Befestigen der Hülse am Ring in Eingriff zu kommen, wobei, das Anschlußstück fest mit dem Ring (11) durch allgemein gebogene Wulsteinrichtungen (17, 18, 66), gebildet durch Ausbeulen des Anschlußstückes, verbunden ist.

2. Endgarnitur für Schläuche nach Anspruch 1, dadurch gekennzeichnet, daß die Wulsteinrichtungen zwei Wülste (17), (18), auf dem Anschlußstück (10) aufweisen, wobei einer dieser Wülste auf jeder Seite des Ringes (11) ausgebildet ist.

3. Endgarnitur für Schläuche nach Anspruch 1, dadurch gekennzeichnet, daß in der inneren Peripherie des Ringes (51) eine Vertiefung (53) ausgebildet ist, und daß die Wulsteinrichtung einen durch Ausbeulen des Anschlußstückes in dieser Vertiefung hergestellten Wulst aufweist.

4. Engarnitur für Schläuche gemäß Anspruch 1, gekennzeichnet durch eine Vielzahl im wesentlichen rohrförmiger Hülsen, von denen jede zur Positionierung um das Anschlußstück (10) eingerichtet ist, so daß sie mindestens teilweise den Ring überlappt und jede ein entsprechend mit dem Schlauch in Eingriff kommendes Anschlußteil besitzt, das angepaßt ist, um mit dem Anschlußstück einen Ringraum zur Aufnahme des Endabschnitts eines Schlauchstückes zu definieren, wobei jede der Hülsen einen sich ringförmig radial nach innen erstreckenden Flansch (29) en einen Ende mit einem das Erstrecken des Flansches über den Ring (11) derart, daß er radial außerhalb der ringförmigen Ausnehmung liegt, erlaubenden Innendurchmesser besitzt, wobei jede Hülse, ihren entsprechenden Flansch einschließend, radial nach innen unter Durchmesser-Reduktion der Hülse, mit dem ringförmigen Flansch der Hülse in Eingriff in der Ausnehmung zur Befestigung der Hülse am Ring deformierbar ist, wobei, jede der Anzahl von Hülsen entsprechende Schlauchanschluß-Abschnitte unterschiedlichen Innendurchmessers besitzt, wodurch dieser Anschluß mit Schläuchen eine Vielzahl unterschiedlicher Außendurchmesser durch Auswahl der Hülse geeigneten Innendurchmessers verwandt werden kann.

5. Verfahren zum Zusammenfügen einer Endgarnitur und eines Schlauches (27), wobei die Endgarnitur ein Anschlußstück (10), einen Ring (11) und eine Hülse (12) aufweist, welches folgende Schritte aufweist: Anordnen des Anschlußstückes in Klemmeinrichtungen (38, 39), um das Anschlußstück stationär zu halten, und Anordnung des Ringes (11) auf dem Anschlußstück und Befestigen des Ringes an dem Anschlußstück; gekennzeichnet durch Ausbilden einer ringförmigen Vertiefung (22) im Außenumfang des Ringes: Ausbilden von Wulsteinrichtungen (17, 18, 66) auf der Hülse, um das Anschlußstück auf dem Ring zu befestigen; getrenntes Ausbilden der Hülse (12) vom Ring und Ausbilden eines sich radial nach innen erstreckenden Flansches (29) an einem Ende der Hülse; Anbringen der Hülse über dem Schlauch: Einsetzen eines Anschlußstückes in den Schlauch, Schieben der Hülse über den Endabschnitt des Schlauches, mindestens teilweise über den Ring mit dem Flansch (29), die Vertiefung (22) überlagernd; und festes Anwürgen der Hülse auf diesem Schlauch und des Flansches (29) in der Vertiefung (22) des Rings.

6. Verfahren nach Anspruch 5, welches ferner eine Vielzahl von Hülsen, wobei jede Hülse einen Schlauchbefestigungsabschnitt und jeder Schlauchbefestigungsabschnitt unterschiedliche Innendurchmesser besitzt, vorsieht, gekennzeichnet durch Ausbilden auf allen diesen Hülsen, sich radial nach innen erstreckender Flansche; Auswählen einer Hülse aus dem Satz, welche einen dem Außendurchmesser des Schlauchs entsprechenden Innendurchmesser besitzt; Anbringen der ausgewählten Hülse über dem Schlauch; Schieben des Anschlußstückes in den Schlauch; und Zusammenpressen der Hülse in festem Eingriff mit dem Schlauch und des Flansches in die Vertiefung des Ringes.

_FIG-1_

_FIG-2_

_FIG-3_

FIG-4

*38*   *43*

*47*   *48*   *42*  *16*  *41*   *10*   *44*   *46*

*39*

FIG-5

*41*   *10*

*18*   *16*

FIG-6

*11*   *52*   *10*

*18*   *21*   *56*   *54*

*53*   *51*

FIG-7

*11*   *53*   *52*   *51*   *10*

*18*   *56*   *17*   *54*

_FIG_ 8

_FIG_ 9